# EUROPEAN PATENT APPLICATION

(11) **EP 4 618 459 A1**
(43) Date of publication of application: **17.09.2025**
(21) Application number: 22964686.4
(22) Date of filing: 07.11.2022
(51) Int. Cl.: H04L 5/00, H04W 72/04

(54) **BEAM INDICATION METHOD AND APPARATUS**

(71) Applicant: Beijing Xiaomi Mobile Software Co., Ltd., Beijing 100085 (CN)
(72) Inventor: LIU, Min, Beijing 100085 (CN)
(74) Representative: Stöckeler, Ferdinand
(86) International application number: PCT/CN2022/130375
(87) International publication number: WO 2024/098208

(57) **Abstract**

Disclosed in the embodiments of the present application are a beam indication method and apparatus, the method comprising: according to a first rule, determining the index information of at least one beam on an access link, the first rule being at least one of the following: a repeater determining the index information of the at least one beam, a network device determining the index information of the at least one beam, and the repeater and the network device determining the index information of the at least one beam according to a second rule, such that the network device and the repeater can determine a mapping relationship between the logical indexing of beams and each actual physical beam. Therefore, a network device and a repeater can determine the indexing of beams on an access link, thus helping to perform subsequent beam-based communication, and further effectively improving the system communication efficiency and increasing system coverage.

## Description

### TECHNICAL FIELD

The present disclosure relates to the field of communication technologies, and in particular to a beam indication method and apparatus.

### BACKGROUND

In related art, a network controlled repeater (NCR) and a network device may indicate a beam on an access link using beam index information. How to determine a logical correspondence relationship between the index information and an actual physical beam, that is, how to indicate each physical beam on the access link is a problem that needs to be considered.

### SUMMARY

A first aspect of the embodiments of the present disclosure provides a beam indication method, which is performed by a relay device, and includes:
determining index information of at least one beam on an access link according to a first rule;
the first rule including at least one of:
determining the index information by the relay device;
determining the index information by a network device; or
determining the index information by the relay device and the network device according to a second rule.

A second aspect of the embodiments of the present disclosure provides a beam indication method, which is performed by a network device and includes:
determining index information of at least one beam on an access link according to a first rule;
the first rule including at least one of:
   determining the index information by a relay device;
   determining the index information by the network device; or
   determining the index information by the relay device and the network device according to a second rule.

A third aspect of the embodiments of the present disclosure provides a beam indication apparatus, which is applied to a relay device, and includes:
a processing unit, configured to determine index information of at least one beam on an access link according to a first rule;
the first rule including at least one of:
   determining the index information by the relay device;
   determining the index information by a network device; or
   determining the index information by the relay device and the network device according to a second rule.

A fourth aspect of the embodiments of the present disclosure provides a beam indication apparatus, which is applied to a network device, and includes:
a processing unit, configured to determine index information of at least one beam on an access link according to a first rule;
the first rule including at least one of:
   determining the index information by a relay device;
   determining the index information by the network device; or
   determining the index information by the relay device and the network device according to a second rule.

A fifth aspect of the embodiments of the present disclosure provides a communication apparatus, which includes a processor and a memory storing a computer program. The processor executes the computer program stored in the memory, so that the apparatus performs the beam indication method described in the first aspect of the embodiments.

A sixth aspect of the embodiments of the present disclosure provides a communication apparatus, which includes a processor and a memory storing a computer program. The processor executes the computer program stored in the memory, so that the apparatus performs the beam indication method described in the second aspect of the embodiments.

A seventh aspect of the embodiments of the present disclosure provides a communication apparatus, which includes a processor and an interface circuit. The interface circuit is configured to receive code instructions and transmit them to the processor, and the processor is configured to run the code instructions to enable the apparatus to execute the beam indication method described in the first aspect of the embodiments above.

An eighth aspect of the embodiments of the present disclosure provides a communication apparatus, which includes a processor and an interface circuit. The interface circuit is configured to receive code instructions and transmit them to the processor, and the processor is configured to run the code instructions to enable the apparatus to execute the beam indication method described in the second aspect of the embodiments.

A ninth aspect of the embodiments of the present disclosure provides a computer-readable storage medium for storing instructions. When the instructions are executed, the beam indication method described in the first aspect of the embodiments above is enabled to be implemented.

A tenth aspect of the embodiments of the present disclosure provides a computer-readable storage medium for storing instructions. When the instructions are executed, the beam indication method described in the second aspect of the embodiments above is enabled to be implemented.

An eleventh aspect of the embodiments of the present disclosure provides a computer program, which, when executed on a computer, enables the computer to execute the beam indication method described in the first aspect of the embodiments.

A twelfth aspect of the embodiments of the present disclosure provides a computer program, which, when executed on a computer, enables the computer to execute the beam indication method described in the second aspect of the embodiments.

According to the beam indication methods and apparatuses provided by the embodiments of the present disclosure, the index information of the at least one beam on the access link is determined according to the first rule, and the first rule includes at least one of determining the index information of the at least one beam by the relay device, determining the index information of the at least one beam by the network device, or determining the index information of the at least one beam by the relay device and the network device according to the second rule, so that the network device and the relay device can determine the mapping relationship between the logical index of the beam and each actual physical beam, and the network device and the relay device can determine the index of the beam on the access link, which facilitates subsequent beam-based communication, effectively improves the system communication efficiency, and enhances the system coverage.

Additional aspects and advantages of the present disclosure will be given in part in the description below, and in part will become apparent from the description below, or will be learned through the practice of the present disclosure.

### BRIEF DESCRIPTION OF THE DRAWINGS

In order to more clearly illustrate the technical solutions in the embodiments of the present disclosure or the background technologies, the drawings required for use in the embodiments of the present disclosure or the background technologies will be described below.
FIG. 1 is a schematic diagram of an architecture of a communication system provided by an embodiment of the present disclosure.
FIG. 2 is a schematic flow chart of a beam indication method provided by an embodiment of the present disclosure.
FIG. 3 is a schematic flow chart of a beam indication method provided by an embodiment of the present disclosure.
FIG. 4 is a schematic flow chart of a beam indication method provided by an embodiment of the present disclosure.
FIG. 5 is a schematic flow chart of a beam indication method provided by an embodiment of the present disclosure.
FIG. 6 is a schematic flow chart of a beam indication method provided by an embodiment of the present disclosure.
FIG. 7 is a schematic flow chart of a beam indication method provided by an embodiment of the present disclosure.
FIG. 8 is a schematic flow chart of a beam indication method provided by an embodiment of the present disclosure.
FIG. 9 is a schematic flow chart of a beam indication method provided by an embodiment of the present disclosure.
FIG. 10 is a schematic structure diagram of a beam indication apparatus provided by an embodiment of the present disclosure.
FIG. 11 is a schematic structure diagram of a beam indication apparatus provided by an embodiment of the present disclosure.
FIG. 12 is a schematic structure diagram of another beam indication apparatus provided by an embodiment of the present disclosure.
FIG. 13 is a schematic structure diagram of a chip provided by an embodiment of the present disclosure.

### DETAILED DESCRIPTION

Exemplary embodiments will be described in detail herein, examples of which are shown in the accompanying drawings. When the following description refers to the drawings, unless otherwise indicated, the same numbers in different drawings represent the same or similar elements. The embodiments described in the following exemplary embodiments do not represent all embodiments consistent with the embodiments of the present disclosure. Instead, they are merely examples of devices and methods consistent with some aspects of the embodiments of the present disclosure as detailed in the appended claims.

The terms used in the embodiments of the present disclosure are only for the purpose of describing specific embodiments, and are not intended to limit the embodiments of the present disclosure. The singular forms of "a", "an" and "the" used in the embodiments of the present disclosure and the appended claims are also intended to include plural forms, unless the context clearly indicates other meanings. It should also be understood that the term "and/or" used herein refers to and includes any or all possible combinations of one or more associated listed items.

It should be understood that, although the terms first, second, third, etc. may be used to describe various information in the embodiments of the present disclosure, this information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the words "if" as used herein may be interpreted as "when", "in a case that", or "in response to determining that".

The embodiments of the present disclosure are described in detail below, and examples of the embodiments are shown in the accompanying drawings, where the same or similar reference numerals throughout represent the same or similar elements. The embodiments described below with reference to the accompanying drawings are exemplary and are intended to be used to explain the present disclosure, and should not be construed as limiting the present disclosure.

In order to better understand the beam indication methods in the embodiments of the present disclosure, the communication system to which the embodiments of the present disclosure are applicable is first described below.

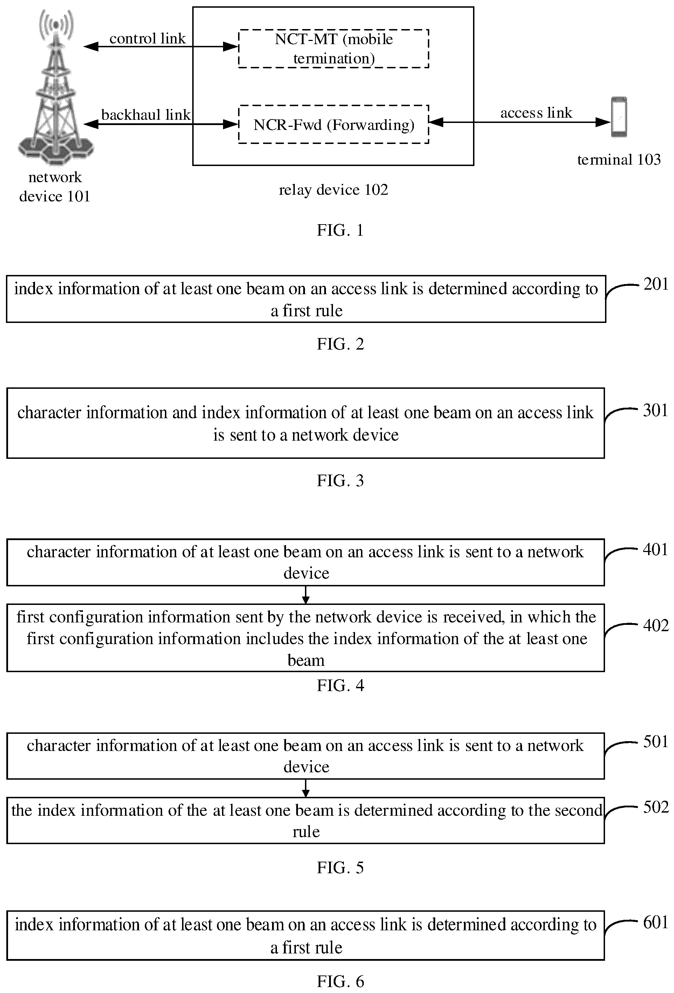

Please refer to FIG. 1, which is a schematic diagram of an architecture of a communication system provided by an embodiment of the present disclosure. The communication system may include, but is not limited to, a network device, a relay device, and a terminal. The number and form of devices shown in FIG. 1 are only used for example and do not constitute a limitation on the embodiments of the present disclosure. In actual applications, two or more network devices, two or more relay devices, and two or more terminals may be included. The communication system shown in FIG. 1 takes one network device 101, one relay device 102, and one terminal 103 as an example.

It should be noted that the technical solutions of the embodiments of the present disclosure is applicable to various communication systems, such as a Long Term Evolution (LTE) system, a fifth generation mobile communication system, a 5G new air interface system, or other future new mobile communication systems.

The network device 101 in this embodiment of the present disclosure is an entity for transmitting or receiving signals on the network side. For example, the network device 101 may be an evolved NodeB (eNB), a transmission point (TRP), a next generation NodeB (gNB) in an NR system, a base station in other future mobile communication systems, or an access node in a wireless fidelity (WiFi) system. The embodiments of the present disclosure do not limit the specific technology and specific device form adopted by the network device. The network device provided in this embodiment of the present disclosure may be composed of a central unit (CU) and a distributed unit (DU), in which the CU may also be referred to as a control unit. The CU-DU structure may be used to split a protocol layer of the network device, such as a base station, and part of functions of the protocol layer is placed in the CU for central control, and the remaining part or all of the functions the protocol layer are distributed in the DU, and the DU is centrally controlled by the CU.

The relay device 102 in the embodiments of the present disclosure is an entity added between a network and a user for forwarding signals once or multiple times. The relay device 102 may be a network controlled repeater (NCR), a network unit, or a terminal with a relay function, etc. The embodiments of the present disclosure do not limit the specific technology and specific device form adopted by the relay device.

The terminal 103 in the embodiments of the present disclosure is an entity for receiving or transmitting signals on the user, such as a mobile phone. The terminal may also be referred to as a terminal device, a user equipment (UE), a mobile station (MS), a mobile terminal (MT), etc. The terminal may be a car with communication function, a smart car, a mobile phone, a wearable device, a Pad, a computer with wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The embodiments of the present disclosure do not limit the specific technology and specific device form adopted by the terminal.

As an example, the relay device in the embodiments of the present disclosure is an NCR.

As shown in FIG. 1, the relay device 102 includes two parts: a mobile termination (MT) and a forwarding (Fwd), in which the MT part may be used to receive control commands sent by the network device 101, and the control commands are used to control a behavior of the Fwd part, i.e., a behavior on a backhaul link and an access link, such as a beam indication direction, opening and closing of the forwarding, etc. The MT part interacts with the network device 101 through a control link, the Fwd part interacts with the network device 101 through the backhaul link, and the Fwd part interacts with the terminal 103 through the access link.

In the related art, the NCR and the network device may indicate a beam on the access link using beam index information. How to determine a logical correspondence relationship between the index information and an actual physical beam, that is, how to indicate each physical beam on the access link is a problem that needs to be considered.

It can be understood that the communication system described in the embodiments of the present disclosure is for more clearly illustrating the technical solution of the embodiments of the present disclosure, and does not constitute a limitation on the technical solution provided in the embodiments of the present disclosure. An ordinary person skilled in the art can know that with the evolution of the system architecture and the emergence of new business scenarios, the technical solutions provided in the embodiments of the present disclosure are also applicable to similar technical problems.

The beam indication methods and apparatuses provided in the present disclosure are described in detail below with reference to the accompanying drawings.

Please refer to FIG. 2, which is a flow chart of a beam indication method provided by an embodiment of the present disclosure. It should be noted that the beam indication method in this embodiment of the present disclosure is performed by a relay device. The method can be performed independently or in combination with any other embodiment of the present disclosure. As shown in FIG. 2, the method may include the following steps.

Step 201, index information of at least one beam on an access link is determined according to a first rule.

In an embodiment of the present disclosure, the relay device may determine the index information of the at least one beam on the access link according to the first rule, that is, the relay device may determine a logical index (beam ID) corresponding to at least one physical beam on the access link.

The first rule includes at least one of:
determining the index information of the at least one beam by the relay device;
determining the index information of the at least one beam by a network device; or
determining the index information of the at least one beam by the relay device and the network device according to a second rule.

In some embodiments, the first rule is determining the index information of the at least one beam by the relay device, and the relay device may send character information of the at least one beam and the index information of the at least one beam to the network device.

In some embodiments, the first rule is determining the index information of the at least one beam by the network device, and the relay device may receive first configuration information sent by the network device. The first configuration information includes the index information of the at least one beam.

In some implementations, the first rule is determining the index information of the at least one beam by the relay device and the network device according to the second rule. The second rule is a rule specified by a communication protocol or pre-configured and commonly understood by the relay device and the network device. The relay device and the network device may determine the index information of the at least one beam on the access link based on the commonly understood second rule.

In an embodiment of the present disclosure, the character information of the beam may include at least one of: the number of beams, a beam width type, a spatial relationship between beams, and the like.

Optionally, the beam width type may include a wide beam, a narrow beam, or a beam width of 3dB, etc. The spatial relationship between the beams may include a vertical boresight angle (an angle between the boresight and the vertical at the antenna panel) and/or a horizontal boresight angle (an angle between the boresight and the horizontal at the antenna panel) of a beam, a relationship of inclusion and being included in a spatial coverage range of the beams, a spatial coverage range of a beam, etc.

In some implementations, the relay device may determine, according to a provision of a communication protocol or pre-configuration, what the first rule is.

In some implementations, the relay device may send first indication information to the network device, and the first indication information is used to indicate the first rule.

In some embodiments, after the relay device determines the index information of the at least one beam, the relay device may also receive second configuration information sent by the network device, and the second configuration information includes the index information of the at least one beam. The relay device may determine the correspondence relationship between the index information of the at least one beam and the at least one physical beam based on the received second configuration information.

In an embodiment of the present disclosure, the above-mentioned various information transmitted between the relay device and the network device (including the character information of the at least one beam, the index information of the at least one beam, the first configuration information, the second configuration information, the first indication information, etc.) may be included in a radio resource control (RRC) signaling or an operation administration and maintenance (OAM) signaling.

In summary, the index information of the at least one beam on the access link is determined according to the first rule, and the first rule includes at least one of determining the index information of the at least one beam by the relay device, determining the index information of the at least one beam by the network device, or determining the index information of the at least one beam by the relay device and the network device according to the second rule, so that the network device and the relay device can determine the mapping relationship between the logical index of the beam and each actual physical beam, and the network device and the relay device can determine the index of the beam on the access link, which facilitates subsequent beam-based communication, effectively improves the system communication efficiency, and enhances the system coverage.

Please refer to FIG. 3, which is a flow chart of a beam indication method provided by an embodiment of the present disclosure. It should be noted that the beam indication method in this embodiment of the present disclosure is performed by a relay device. The method can be performed independently or in combination with any other embodiment of the present disclosure. As shown in FIG. 3, the method may include the following steps.

Step 301, character information and index information of at least one beam on an access link is sent to a network device.

In an embodiment of the present disclosure, a first rule is determining the index information of the at least one beam on the access link by the relay device. The relay device may send the character information of the at least one beam on the access link and the index information of the at least one beam to the network device.

In an embodiment of the present disclosure, the character information of the beam may include at least one of: the number of beams, a beam width type, a spatial relationship between beams, and the like.

Optionally, the beam width type may include a wide beam, a narrow beam, or a beam width of 3dB, etc. The spatial relationship between the beams may include a vertical boresight angle (an angle between the boresight and the vertical at the antenna panel) and/or a horizontal boresight angle (an angle between the boresight and the horizontal at the antenna panel) of a beam, a relationship of inclusion and being included in a spatial coverage range of the beams, a spatial coverage range of a beam, etc.

In an embodiment of the present disclosure, the character information of the beam sent by the relay device to the network device may be used by the network device to correspond at least one physical beam with the index information of the at least one beam.

Optionally, the relay device sends the character information of the at least one beam and the index information corresponding to each beam to the network device.

As an example, the character information and the index information of the beam sent by the relay device to the network device may be as follows:
Beam #1 corresponds to a wide beam, with a horizontal boresight angle of X° and a vertical boresight angle of Y° (where X, Y ∈ [0,360]).

In some implementations, the relay device may determine, according to the provision of the communication protocol or the pre-configuration, the first rule to be determining the index of the at least one beam by the relay device. After determining the index of the at least one beam, the relay device may send it to the network device.

In some implementations, the relay device may send first indication information to the network device, and the first indication information is used to indicate that the first rule is determining the index information of the at least one beam by the relay device.

Optionally, the first indication information may be another indication information, or may be the index information of the at least one beam. That is, after the network device receives the index information of the at least one beam sent by the relay device, it may determine that the first rule is determining the index information of the at least one beam by the relay device, and determine the index of the at least one beam on the access link based on the character information and the index information sent by the relay device.

In some embodiments, after the relay device determines the index information of the at least one beam, the relay device may also receive second configuration information sent by the network device, and the second configuration information includes the index information of the at least one beam. The relay device may determine the correspondence relationship between the index information of the at least one beam and at least one physical beam based on the received second configuration information.

Optionally, the second configuration information may include updated index information of the at least one beam, and the relay device may update the index information of the at least one beam according to the received second configuration information.

As an example, the relay device determines the beam ID (for example, beam #1 corresponds to a wide beam, a horizontal boresight angle of X°, and a vertical boresight angle of Y°), and the relay device receives the second configuration information sent by the network device, in which the second configuration information includes the index information of the beam: beam #1 corresponds to a narrow beam, a horizontal boresight angle of X°, and a vertical boresight angle of Y°. Then the relay device updates the index information of the beam according to the second configuration information, and considers that the physical beam corresponding to beam ID #1 is a narrow beam, the horizontal boresight angle is X°, and the vertical boresight angle is Y° (where X, Y ∈ [0,360]).

In an embodiment of the present disclosure, the above-mentioned various information transmitted between the relay device and the network device (including the character information of the at least one beam, the index information of the at least one beam, the second configuration information, the first indication information, etc.) may be included in an RRC signaling or an OAM signaling.

In summary, by sending the character information of the at least one beam on the access link and the index information of the at least one beam to the network device, the network device and the relay device can determine the mapping relationship between the logical index of the beam and each actual physical beam. The network device and the relay device can determine the index of the beam on the access link, which facilitates subsequent beam-based communication, effectively improves the system communication efficiency, and enhances the system coverage.

Please refer to FIG. 4, which is a flow chart of a beam indication method provided by an embodiment of the present disclosure. It should be noted that the beam indication method in this embodiment of the present disclosure is executed by a first network device. The method may be executed independently or in combination with any other embodiment of the present disclosure. As shown in FIG. 4, the method may include the following steps.

Step 401, character information of at least one beam on an access link is sent to a network device.

In an embodiment of the present disclosure, the first rule is determining index information of the at least one beam on the access link by the network device. The relay device may send the character information of the at least one beam on the access link to the network device.

In an embodiment of the present disclosure, the character information of the beam may include at least one of: the number of beams, a beam width type, a spatial relationship between the beams, and the like.

Optionally, the beam width type may include a wide beam, a narrow beam, or a beam width of 3dB, etc. The spatial relationship between the beams may include a vertical boresight angle (an angle between the boresight and the vertical at the antenna panel) and/or a horizontal boresight angle (an angle between the boresight and the horizontal at the antenna panel) of a beam, a relationship of inclusion and being included in a spatial coverage range of the beams, a spatial coverage range of a beam, etc.

In some implementations, the character information of the beam sent by the relay device to the network device may be used by the network device to determine the index information of the at least one beam. The network device may also determine the index information of the at least one beam based on other information (such as deployment information, measurement test information, etc.) or beam character information reported by another device.

In some implementations, the network device may not know physical character information of the at least one beam, and only needs to determine a correspondence relationship between a physical beam direction and the beam index information.

Step 402, first configuration information sent by the network device is received, in which the first configuration information includes the index information of the at least one beam.

In an embodiment of the present disclosure, the first rule is determining the index information of the at least one beam by the network device, the relay device may receive the first configuration information sent by the network device, the first configuration information includes the index information of the at least one beam, and the relay device may determine the index information of at least one beam on the access link according to the first configuration information.

Optionally, the first configuration information includes the character information of the at least one beam and the index information corresponding to at least one physical beam.

As an example, the first configuration information sent by the network device to the relay device may be as follows:
Beam #1 corresponds to a wide beam, a horizontal boresight angle of 45°, and a vertical boresight angle of 120°;
Beam #11 corresponds to a narrow beam, a horizontal boresight angle of 45°, and a vertical boresight angle of 120°, and so on.

It can be understood that the at least one beam for which the network device determines the index information may be all or part of at least one beam for which the relay device sends the character information, that is, the network device may configure the index information of some of the beams based on other information (such as deployment information, measurement test information, etc.) and may configure it for the relay device.

As an example, the character information of the beam sent by the relay device includes that the total number of wide beams is 4, and there are 6 narrow beams for each wide beam, vertical angles between the wide beam orientation (boresight) and the antenna panel are 60°, 90°, 120°, and 150°, respectively. The network device knows from the deployment or the test information that there is no coverage requirement in the 60° direction and the 90° direction will cause interference to other network devices. Therefore, the network device configures the beam indexes as #1 to #14, which correspond to the wide beams whose vertical angles between the boresight and the antenna panel are 120° and 150° and narrow beams included in the wide beams, respectively.

Optionally, beams #1 to #2 may correspond to the wide beams, beams #3 to #8 and beams #9-#14 may correspond to the narrow beams included in beam #1 and beam #2, respectively; or beam #1 may correspond to a wide beam, beams #2 to #7 may correspond to the narrow beams included in beam #1, beam #8 may correspond to a wide beam, beams #9 to #14 may correspond to the narrow beams included in beam #8, and so on. The embodiments of the present disclosure are not limited here.

In some embodiments, the relay device may determine, according to the provision of the communication protocol or pre-configuration, the first rule to be determining the index of the at least one beam by the network device.

In some embodiments, the relay device may send first indication information to the network device, and the first indication information is used to indicate that the first rule is determining the index information of the at least one beam by the network device, and the network device may determine the index information of the at least one beam after receiving the first indication information.

In an embodiment of the present disclosure, the above-mentioned various information transmitted between the relay device and the network device (including the character information of the at least one beam, the index information of the at least one beam, the first configuration information, the first indication information, etc.) may be included in an RRC signaling or an OAM signaling.

In summary, by sending the character information of the at least one beam on the access link to the network device and receiving the first configuration information sent by the network device, and the first configuration information including the index information of the at least one beam, the network device and the relay device can determine the mapping relationship between the logical index of the beam and each actual physical beam. The network device and the relay device can determine the index of the beam on the access link, which facilitates subsequent beam-based communication, effectively improves the system communication efficiency, and enhances the system coverage.

Please refer to FIG. 5, which is a flowchart of a beam indication method provided by an embodiment of the present disclosure. It should be noted that the beam indication method in this embodiment of the present disclosure is performed by a relay device. The method can be performed independently or in combination with any other embodiment of the present disclosure. As shown in FIG. 5, the method may include the following steps.

Step 501, character information of at least one beam on an access link is sent to a network device.

In an embodiment of the present disclosure, the first rule is determining the index information of the at least one beam on the access link by the relay device and the network device according to the second rule. The relay device may send the character information of the at least one beam on the access link to the network device.

In an embodiment of the present disclosure, the character information of the beam may include at least one of: the number of beams, a beam width type, a spatial relationship between beams, and the like.

Optionally, the beam width types may include a wide beam, a narrow beam, or a beam width of 3dB, etc. The spatial relationship between the beams may include a vertical boresight angle (an angle between the boresight and the vertical at the antenna panel) and/or a horizontal boresight angle (an angle between the boresight and the horizontal at the antenna panel) of a beam, a relationship of inclusion and being included in a spatial coverage range of the beams, a spatial coverage range of a beam, etc.

In some implementations, the character information of the beam sent by the relay device to the network device may be used by the network device to determine the index information of the at least one beam according to the second rule.

In some implementations, the network device may not know physical character information of the at least one beam, and only needs to determine a correspondence relationship between a physical beam direction and the beam index information.

Step 502, the index information of the at least one beam is determined according to the second rule.

In an embodiment of the present disclosure, the relay device may determine the index information of at least one beam on the access link according to the second rule.

The second rule is a rule specified by a communication protocol or preconfigured and commonly understood by the relay device and the network device. The relay device and the network device may determine the index information of the at least one beam on the access link based on the commonly understood second rule.

Optionally, the relay device determines the character information of the at least one beam and the index information corresponding to each beam according to the second rule.

As an example, the second rule may be: sorting wide beams first, then sorting narrow beams in sequence, and sorting the index information of all the beams in sequence backward. For example, the total number of wide beams included in the beam character information sent by the relay device to the network device is 4, and there are 6 narrow beams for each wide beam, then the relay device may determine the index information #1~#28 of the at least one beam, in which beams #1~#4 correspond to the 4 wide beams, beams #5~#10 correspond to the 6 narrow beams for the first wide beam (beam #1), beams #11~#16 correspond to the 6 narrow beams for the second wide beam (beam #2), beams #17~#22 correspond to the 6 narrow beams for the third wide beam (beam #3), and beams #23~#28 correspond to the 6 narrow beams for the fourth wide beam (beam #4).

As another example, the second rule may also be: sorting wide beams first, then sorting narrow beams in sequence, and sorting the index information of all the beams in a hierarchical manner. For example, the total number of wide beams included in the beam character information sent by the relay device to the network device is 4, and there are 6 narrow beams for each wide beam. Then the relay device may determine the index information #1 to #4-6 of the at least one beam, where beam #1 corresponds to the first wide beam, beams #1-1 to #1-6 correspond to the 6 narrow beams for the first wide beam (beam #1), beam #2 corresponds to the second wide beam, beams #2-1 to #2-6 correspond to the 6 narrow beams for the second wide beam (beam #2), beam #3 corresponds to the third wide beam, beams #3-1 to #3-6 correspond to the 6 narrow beams for the third wide beam (beam #3), beam #4 corresponds to the fourth wide beam, and beams #4-1 to #4-6 correspond to the 6 narrow beams for the fourth wide beam (beam #4).

It is understandable that the second rule may also be another rule for determining the index information of each beam, such as sorting narrow beams first and then sorting wide beams, etc., which is not limited in the embodiments of the present disclosure.

In some embodiments, after the relay device determines the index information of the at least one beam, the relay device may also receive second configuration information sent by the network device, and the second configuration information includes the index information of the at least one beam. The relay device may determine the correspondence relationship between the index information of the at least one beam and at least one physical beam based on the received second configuration information.

Optionally, the second configuration information may include updated index information of the at least one beam, and the relay device may update the index information of the at least one beam according to the received second configuration information.

As an example, the relay device determines the beam ID (for example, beam #1 corresponds to a wide beam, a horizontal boresight angle of X°, and a vertical boresight angle of Y°), and the relay device receives the second configuration information sent by the network device, in which the second configuration information includes the index information of the beam: beam #1 corresponds to a narrow beam, a horizontal boresight angle of X°, and a vertical boresight angle of Y°. Then the relay device updates the index information of the beam according to the second configuration information, and considers that the physical beam corresponding to beam ID #1 is a narrow beam, the horizontal boresight angle is X°, and the vertical boresight angle is Y° (where X, Y ∈ [0,360]).

In some implementations, the relay device may determine, according to the provision of the communication protocol or pre-configuration, the first rule to be determining the index of the at least one beam by the relay device and the network device according to the second rule.

In some embodiments, the relay device may send first indication information to the network device, in which the first indication information is used to indicate that the first rule is determining the index information of the at least one beam by the relay device and the network device according to the second rule. After receiving the first indication information, the network device may determine the index information of the at least one beam according to the second rule.

In an embodiment of the present disclosure, the above-mentioned various information transmitted between the relay device and the network device (including the character information of the at least one beam, the second configuration information, the first indication information, etc.) may be included in an RRC signaling or an OAM signaling.

In summary, by sending the character information of the at least one beam on the access link to the network device and receiving the beam indication information sent by the network device, the network device and the relay device can determine the mapping relationship between the logical index of the beam and each actual physical beam. The network device and the relay device can determine the index of the beam on the access link, which facilitates subsequent beam-based communication, effectively improves the system communication efficiency, and enhances the system coverage.

Optionally, in some implementations, the first rule may also be a combination of:
determining the index information of the at least one beam by the relay device;
determining the index information of the at least one beam by the network device;
determining the index information of the at least one beam by the relay device and the network device according to the second rule.

In some implementations, beam IDs of some beams may be determined by the network device, and beam IDs of some beams may be determined by the relay device and/or the predefined rule.

In some implementations, the relay device and/or the predefined rule may first determine beam IDs of all the beams first, and the network device may determine beam IDs of all/part of the beams and configure them to the relay device for updating.

As a possible embodiment, the first rule is a combination of "determining the index information of the at least one beam by the network device" and "determining the index information of the at least one beam by the relay device and the network device according to the second rule", in which the network device only needs to determine a beam ID whose beam width type is a wide beam, and the relay device and the network device determine a beam ID whose beam width type is a narrow beam according to the second rule. For example, the beam character information sent by the relay device to the network device includes a total number of wide beams being 4, and each wide beam has a total of 6 narrow beams, the network device determines wide beam IDs to be #1-#4, and the relay device and the network device determine beam IDs of the narrow beams to be #1-1, #1-2, ... #2-1 ... #3-1 ... #4-1 ... #4-6 based on the predefined second rule, in which beams #1-1 to #1-6 are narrow beams spatially included in wide beam #1, and similar beams #2-1 to 2-6 are narrow beams spatially included in wide beam #2, and so on.

As a possible embodiment, the first rule is a combination of "determining the index information of the at least one beam by the network device" and "determining the index information of the at least one beam by the relay device", in which the relay device only needs to determine a beam ID whose beam width type is a wide beam, and the network device determines a beam ID whose beam width type is a narrow beam. For example, the beam character information sent by the relay device to the network device includes a total number of wide beams being 4, and there are 6 narrow beams for each wide beam. The relay device determines that wide beam IDs are #1-#4, and the network device determines which narrow beam needs to be assigned a beam ID and configures the narrow beam ID to the relay device. For example, the network device determines that the narrow beam IDs are #1-1, #1-6, #2-1, #2-5, #3-4, #3-6, #4-1, #4-2, #4-3, #4-4, #4-5, #4-6, and configures the narrow beam IDs to the relay device.

As a possible embodiment, the first rule is a combination of "determining the index information of the at least one beam by the network device" and "determining the index information of the at least one beam by the relay device", in which the relay device only needs to determine a beam ID whose beam width type is a wide beam, and the network device determines a beam ID whose beam width type is a narrow beam. For example, a total number of wide beams included in the beam character information sent by the relay device to the network device is 4, and there are 6 narrow beams for each wide beam, and the beam IDs are #1, #2, #3, #4, #1-1, #1-2,..., #2-1,..., #3-1,..., #4-1,..., #4-6, in which beams #1-1 to #1-6 are narrow beams spatially included in wide beam #1, and similar beams #2-1 to #2-6 are narrow beams spatially included in wide beam #2, and so on. The network device configures all beam IDs to the relay device, and the beam IDs are #1, #2, #3, #4, #1-1, #1-2,..., #4-1, #4-2, #4-3, #4-4, #4-5, #4-6.

As a possible embodiment, the first rule is a combination of "determining the index information of the at least one beam by the network device" and "determining the index information of the at least one beam by the relay device", in which the relay device determines beam IDs of all beams, and the network device determines which beam needs to be assigned a beam ID. For example, a total number of wide beams included in the beam character information sent by the relay device to the network device is 4, and each wide beam has a total of 6 narrow beams. The relay device determines that all beam IDs are #1 to #4-6, and the network device determines which beam needs to be assigned the beam ID and configures the beam ID to the relay device.

Please refer to FIG. 6, which is a flowchart of a beam indication method provided by an embodiment of the present disclosure. It should be noted that the beam indication method in this embodiment of the present disclosure is executed by a network device. The method may be executed independently or in combination with any other embodiment of the present disclosure. As shown in FIG. 6, the method may include the following steps.

Step 601, index information of at least one beam on an access link is determined according to a first rule.

In an embodiment of the present disclosure, the network device may determine the index information of the at least one beam on the access link according to the first rule, that is, the relay device may determine a logical index (beam ID) corresponding to at least one physical beam on the access link.

The first rule includes at least one of:
determining the index information of the at least one beam by a relay device;
determining the index information of the at least one beam by the network device; or
determining the index information of the at least one beam by the relay device and the network device according to a second rule.

In some embodiments, the first rule is determining the index information of the at least one beam by the relay device, and the network device may receive character information of the at least one beam and the index information of the at least one beam sent by the relay device.

In some implementations, the first rule is determining the index information of the at least one beam by the network device, and the network device may determine the index information of the at least one beam, and may send first configuration information to the relay device. The first configuration information including the index information of the at least one beam. The relay device may determine the index information of the at least one beam according to the first configuration information.

In some implementations, the first rule is determining the index information of the at least one beam by the relay device and the network device according to the second rule. The second rule is a rule specified by a communication protocol or pre-configured and commonly understood by the relay device and the network device. The relay device and the network device may determine the index information of the at least one beam on the access link based on the commonly understood second rule.

In an embodiment of the present disclosure, the character information of the beam may include at least one of: the number of beams, a beam width type, a spatial relationship between beams, and the like.

Optionally, the beam width type may include a wide beam, a narrow beam, or a beam width of 3dB, etc. The spatial relationship between the beams may include a vertical boresight angle (an angle between the boresight and the vertical at the antenna panel) and/or a horizontal boresight angle (an angle between the boresight and the horizontal at the antenna panel) of a beam, a relationship of inclusion and being included in a spatial coverage range of the beams, a spatial coverage range of a beam, etc.

In some implementations, the network device may determine, according to a provision of a communication protocol or pre-configuration, what the first rule is.

In some implementations, the network device may receive first indication information sent by the relay device, and the first indication information is used to indicate the first rule.

In some embodiments, after the relay device determines the index information of the at least one beam, the network device may also send second configuration information to the relay device, and the second configuration information includes the index information of the at least one beam. The relay device may determine the correspondence relationship between the index information of the at least one beam and the at least one physical beam based on the received second configuration information.

In an embodiment of the present disclosure, the above-mentioned various information transmitted between the relay device and the network device (including the character information of the at least one beam, the index information of the at least one beam, the first configuration information, the second configuration information, the first indication information, etc.) may be included in an RRC signaling or an OAM signaling.

In summary, the index information of the at least one beam on the access link is determined according to the first rule, and the first rule includes at least one of determining the index information of the at least one beam by the relay device, determining the index information of the at least one beam by the network device, or determining the index information of the at least one beam by the relay device and the network device according to the second rule, so that the network device and the relay device can determine the mapping relationship between the logical index of the beam and each actual physical beam, and the network device and the relay device can determine the index of the beam on the access link, which facilitates subsequent beam-based communication, effectively improves the system communication efficiency, and enhances the system coverage.

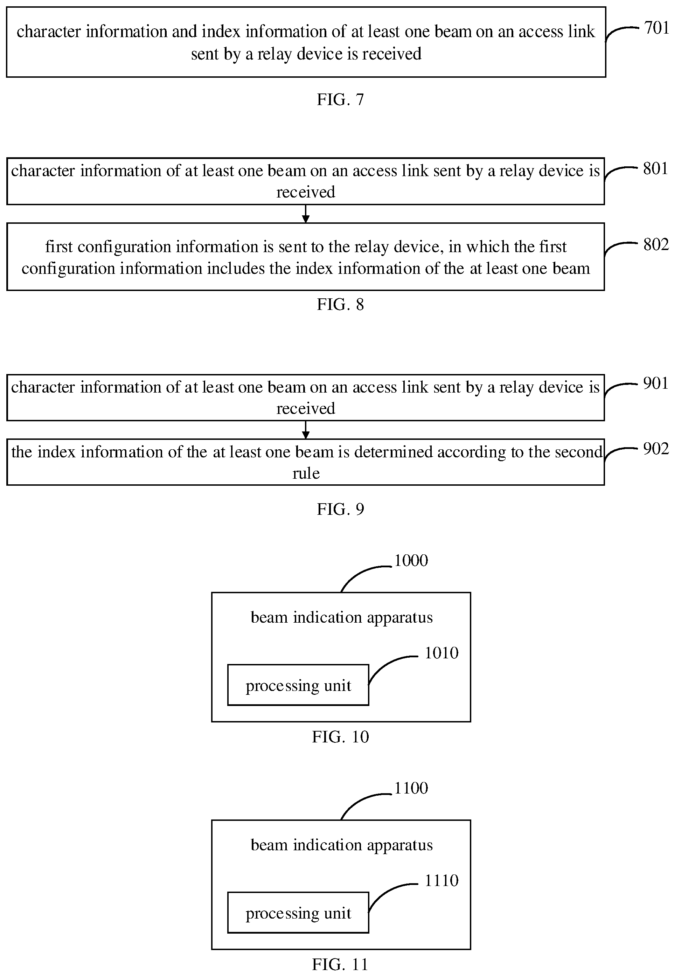

Please refer to FIG. 7, which is a flowchart of a beam indication method provided by an embodiment of the present disclosure. It should be noted that the beam indication method in this embodiment of the present disclosure is executed by a network device. The method may be executed independently or in combination with any other embodiment of the present disclosure. As shown in FIG. 7, the method may include the following steps.

Step 701, character information and index information of at least one beam on an access link sent by a relay device is received.

In an embodiment of the present disclosure, a first rule is determining the index information of the at least one beam on the access link by the relay device. The network device may receive the character information of the at least one beam on the access link and the index information of the at least one beam sent by the relay device.

In this embodiment of the present disclosure, the character information of the beam may include at least one of: the number of beams, a beam width type, a spatial relationship between beams, and the like.

Optionally, the beam width type may include a wide beam, a narrow beam, or a beam width of 3dB, etc. The spatial relationship between the beams may include a vertical boresight angle (an angle between the boresight and the vertical at the antenna panel) and/or a horizontal boresight angle (an angle between the boresight and the horizontal at the antenna panel) of a beam, a relationship of inclusion and being included in a spatial coverage range of the beams, a spatial coverage range of a beam, etc.

In an embodiment of the present disclosure, the character information of the beam sent by the relay device to the network device may be used by the network device to correspond at least one physical beam with the index information of the at least one beam.

Optionally, the network device may receive the character information of the at least one beam and the index information corresponding to each beam sent by the relay device.

As an example, the character information and the index information of the beam sent by the relay device and received by the network device may be as follows:
Beam #1 corresponds to a wide beam, with a horizontal boresight angle of X° and a vertical boresight angle of Y° (where X, Y ∈ [0,360]).

In some implementations, the network device may determine, according to the provision of the communication protocol or the pre-configuration, the first rule to be determining the index of the at least one beam by the relay device. After the relay device determines the index of the at least one beam, the relay device may send it to the network device.

In some implementations, the network device may receive first indication information sent by the relay device, and the first indication information is used to indicate that the first rule is determining the index information of the at least one beam by the relay device.

Optionally, the first indication information may be another indication information, or may be the index information of the at least one beam. That is, after the network device receives the index information of the at least one beam sent by the relay device, it may determine that the first rule is determining the index information of the at least one beam by the relay device, and determine the index of the at least one beam on the access link based on the character information and the index information sent by the relay device.

In some embodiments, after the relay device determines the index information of the at least one beam, the network device may also send second configuration information to the relay device, and the second configuration information includes the index information of the at least one beam. The relay device may determine the correspondence relationship between the index information of the at least one beam and at least one physical beam based on the received second configuration information.

Optionally, the second configuration information may include updated index information of the at least one beam, and the relay device may update the index information of the at least one beam according to the received second configuration information.

As an example, the relay device determines the beam ID (for example, beam #1 corresponds to a wide beam, a horizontal boresight angle of X°, and a vertical boresight angle of Y°), and the relay device receives the second configuration information sent by the network device, in which the second configuration information includes the index information of the beam: beam #1 corresponds to a narrow beam, a horizontal boresight angle of X°, and a vertical boresight angle of Y°. Then the relay device updates the index information of the beam according to the second configuration information, and considers that the physical beam corresponding to beam ID #1 is a narrow beam, the horizontal boresight angle is X°, and the vertical boresight angle is Y° (where X, Y ∈ [0,360]).

In an embodiment of the present disclosure, the above-mentioned various information transmitted between the relay device and the network device (including the character information of the at least one beam, the index information of the at least one beam, the second configuration information, the first indication information, etc.) may be included in an RRC signaling or an OAM signaling.

In summary, by receiving the character information of the at least one beam on the access link and the index information of the at least one beam sent by the relay device, the network device and the relay device can determine the mapping relationship between the logical index of the beam and each actual physical beam. The network device and the relay device can determine the index of the beam on the access link, which facilitates subsequent beam-based communication, effectively improves the system communication efficiency, and enhances the system coverage.

Please refer to FIG. 8, which is a flowchart of a beam indication method provided by an embodiment of the present disclosure. It should be noted that the beam indication method in this embodiment of the present disclosure is executed by a network device. The method may be executed independently or in combination with any other embodiment of the present disclosure. As shown in FIG. 8, the method may include the following steps.

Step 801, character information of at least one beam on an access link sent by a relay device is received.

In this embodiment of the present disclosure, the first rule is determining index information of the at least one beam on the access link by the network device. The network device may receive the character information of at least one beam on the access link sent by the relay device.

In an embodiment of the present disclosure, the character information of the beam may include at least one of: the number of beams, a beam width type, a spatial relationship between the beams, and the like.

Optionally, the beam width type may include a wide beam, a narrow beam, or a beam width of 3dB, etc. The spatial relationship between the beams may include a vertical boresight angle (an angle between the boresight and the vertical at the antenna panel) and/or a horizontal boresight angle (an angle between the boresight and the horizontal at the antenna panel) of a beam, a relationship of inclusion and being included in a spatial coverage range of the beams, a spatial coverage range of a beam, etc.

In some implementations, the character information of the beam sent by the relay device to the network device may be used by the network device to determine the index information of the at least one beam. The network device may also determine the index information of the at least one beam based on other information (such as deployment information, measurement test information, etc.) or beam character information reported by another device.

In some implementations, the network device may not know physical character information of the at least one beam, and only needs to determine a correspondence relationship between a physical beam direction and the beam index information.

Step 802, first configuration information is sent to the relay device, in which the first configuration information includes the index information of the at least one beam.

In an embodiment of the present disclosure, the first rule is determining the index information of the at least one beam by the network device, the network device may send the first configuration information to the relay device, the first configuration information includes the index information of the at least one beam, and the relay device may determine the index information of at least one beam on the access link according to the first configuration information.

Optionally, the first configuration information includes the character information of the at least one beam and the index information corresponding to at least one physical beam.

As an example, the first configuration information sent by the network device to the relay device may be as follows:
Beam #1 corresponds to a wide beam, a horizontal boresight angle of 45°, and a vertical boresight angle of 120°;
Beam #11 corresponds to a narrow beam, a horizontal boresight angle of 45°, and a vertical boresight angle of 120°, and so on.

It can be understood that the at least one beam for which the network device determines the index information may be all or part of at least one beam for which the relay device sends the character information, that is, the network device may configure the index information of some of the beams based on other information (such as deployment information, measurement test information, etc.) and may configure it for the relay device.

As an example, the character information of the beam sent by the relay device includes that the total number of wide beams is 4, and there are 6 narrow beams for each wide beam, vertical angles between the wide beam orientation (boresight) and the antenna panel are 60°, 90°, 120°, and 150°, respectively. The network device knows from the deployment or the test information that there is no coverage requirement in the 60° direction and the 90° direction will cause interference to other network devices. Therefore, the network device configures the beam indexes as #1 to #14, which correspond to the wide beams whose vertical angles between the boresight and the antenna panel are 120° and 150° and narrow beams included in the wide beams, respectively.

Optionally, beams #1 to #2 may correspond to the wide beams, beams #3 to #8 and beams #9-#14 may correspond to the narrow beams included in beam #1 and beam #2, respectively; or beam #1 may correspond to a wide beam, beams #2 to #7 may correspond to the narrow beams included in beam #1, beam #8 may correspond to a wide beam, beams #9 to #14 may correspond to the narrow beams included in beam #8, and so on. The embodiments of the present disclosure are not limited here.

In some implementations, the network device may determine, according to the provision of the communication protocol or pre-configuration, the first rule to be determining the index of the at least one beam by the network device. The network device may determine the index information of the at least one beam.

In some embodiments, the relay device may send first indication information to the network device, and the first indication information is used to indicate that the first rule is determining the index information of the at least one beam by the network device, and the network device may determine the index information of the at least one beam after receiving the first indication information.

In an embodiment of the present disclosure, the above-mentioned various information transmitted between the relay device and the network device (including the character information of the at least one beam, the index information of the at least one beam, the first configuration information, the first indication information, etc.) may be included in an RRC signaling or an OAM signaling.

In summary, by receiving the character information of at least one beam on the access link sent by the relay device and sending the first configuration information to the relay device, and the first configuration information including the index information of the at least one beam, the network device and the relay device can determine the mapping relationship between the logical index of the beam and each actual physical beam. The network device and the relay device can determine the index of the beam on the access link, which facilitates subsequent beam-based communication, effectively improves the system communication efficiency, and enhances the system coverage.

Please refer to FIG. 9, which is a flowchart of a beam indication method provided by an embodiment of the present disclosure. It should be noted that the beam indication method in this embodiment of the present disclosure is executed by a network device. The method may be executed independently or in combination with any other embodiment of the present disclosure. As shown in FIG. 9, the method may include the following steps.

Step 901, character information of at least one beam on an access link sent by a relay device is received.

In this embodiment of the present disclosure, the first rule is determining the index information of the at least one beam on the access link by the relay device and the network device according to the second rule. The network device may receive the character information of the at least one beam on the access link sent by the relay device.

In this embodiment of the present disclosure, the character information of the beam may include at least one of: the number of beams, a beam width type, a spatial relationship between beams, and the like.

Optionally, the beam width types may include a wide beam, a narrow beam, or a beam width of 3dB, etc. The spatial relationship between the beams may include a vertical boresight angle (an angle between the boresight and the vertical at the antenna panel) and/or a horizontal boresight angle (an angle between the boresight and the horizontal at the antenna panel) of a beam, a relationship of inclusion and being included in a spatial coverage range of the beams, a spatial coverage range of a beam, etc.

In some implementations, the character information of the beam sent by the relay device to the network device may be used by the network device to determine the index information of the at least one beam according to the second rule.

In some implementations, the network device may not know physical character information of the at least one beam, and only needs to determine a correspondence relationship between a physical beam direction and the beam index information.

Step 902, the index information of the at least one beam is determined according to the second rule.

In an embodiment of the present disclosure, the network device may determine the index information of the at least one beam on the access link according to the second rule.

The second rule is a rule specified by a communication protocol or preconfigured and commonly understood by the relay device and the network device. The relay device and the network device may determine the index information of the at least one beam on the access link based on the commonly understood second rule.

Optionally, the network device determines the character information of the at least one beam and the index information corresponding to each beam according to the second rule.

As an example, the second rule may be: sorting wide beams first, then sorting narrow beams in sequence, and sorting the index information of all the beams in sequence backward. For example, the total number of wide beams included in the beam character information sent by the relay device to the network device is 4, and there are 6 narrow beams for each wide beam, then the network device may determine the index information #1~#28 of the at least one beam, in which beams #1~#4 correspond to the 4 wide beams, beams #5~#10 correspond to the 6 narrow beams for the first wide beam (beam #1), beams #11~#16 correspond to the 6 narrow beams for the second wide beam (beam #2), beams #17~#22 correspond to the 6 narrow beams for the third wide beam (beam #3), and beams #23~#28 correspond to the 6 narrow beams for the fourth wide beam (beam #4).

As another example, the second rule may also be: sorting wide beams first, then sorting narrow beams in sequence, and sorting the index information of all the beams in a hierarchical manner. For example, the total number of wide beams included in the beam character information sent by the relay device to the network device is 4, and there are 6 narrow beams for each wide beam. Then the network device may determine the index information #1 to #4-6 of the at least one beam, where beam #1 corresponds to the first wide beam, beams #1-1 to #1-6 correspond to the 6 narrow beams for the first wide beam (beam #1), beam #2 corresponds to the second wide beam, beams #2-1 to #2-6 correspond to the 6 narrow beams for the second wide beam (beam #2), beam #3 corresponds to the third wide beam, beams #3-1 to #3-6 correspond to the 6 narrow beams for the third wide beam (beam #3), beam #4 corresponds to the fourth wide beam, and beams #4-1 to #4-6 correspond to the 6 narrow beams for the fourth wide beam (beam #4).

It is understandable that the second rule may also be another rule for determining the index information of each beam, such as sorting narrow beams first and then sorting wide beams, etc., which is not limited in the embodiments of the present disclosure.

In some embodiments, after the relay device determines the index information of the at least one beam, the network device may also send second configuration information to the relay device, and the second configuration information includes the index information of the at least one beam. The relay device may determine the correspondence relationship between the index information of the at least one beam and at least one physical beam based on the received second configuration information.

Optionally, the second configuration information may include updated index information of the at least one beam, and the relay device may update the index information of the at least one beam according to the received second configuration information.

As an example, the relay device determines the beam ID (for example, beam #1 corresponds to a wide beam, a horizontal boresight angle of X°, and a vertical boresight angle of Y°), and the relay device receives the second configuration information sent by the network device, in which the second configuration information includes the index information of the beam: beam #1 corresponds to a narrow beam, a horizontal boresight angle of X°, and a vertical boresight angle of Y°. Then the relay device updates the index information of the beam according to the second configuration information, and considers that the physical beam corresponding to beam ID #1 is a narrow beam, the horizontal boresight angle is X°, and the vertical boresight angle is Y° (where X, Y ∈ [0,360]).

In some implementations, the network may determine, according to the provision of the communication protocol or pre-configuration, the first rule to be determining the index of the at least one beam by the relay device and the network device according to the second rule.

In some embodiments, the network device may also receive first indication information sent by the relay device, in which the first indication information is used to indicate that the first rule is determining the index information of the at least one beam by the relay device and the network device according to the second rule. After receiving the first indication information, the network device may determine the index information of the at least one beam according to the second rule.

In an embodiment of the present disclosure, the above-mentioned various information transmitted between the relay device and the network device (including the character information of the at least one beam, the second configuration information, the first indication information, etc.) may be included in an RRC signaling or an OAM signaling.

In summary, by sending the character information of the at least one beam on the access link to the network device and receiving the beam indication information sent by the network device, the network device and the relay device can determine the mapping relationship between the logical index of the beam and each actual physical beam. The network device and the relay device can determine the index of the beam on the access link, which facilitates subsequent beam-based communication, effectively improves the system communication efficiency, and enhances the system coverage.

Corresponding to the beam indication methods provided in the above-mentioned embodiments, the present disclosure also provides beam indication apparatuses. Since the beam indication apparatuses provided in the embodiments of the present disclosure corresponds to the methods provided in the above-mentioned embodiments, the implementation of the beam indication methods is also applicable to the beam indication apparatuses provided in the following embodiments and will not be described in detail in the following embodiments.

Please refer to FIG. 10, which is a schematic structure diagram of a beam indication apparatus provided by an embodiment of the present disclosure.

As shown in FIG. 10, the beam indication apparatus 1000 includes: a processing unit 1010.

The processing unit 1010 is configured to determine index information of at least one beam on an access link according to a first rule.

The first rule includes at least one of:
determining the index information by the relay device;
determining the index information by a network device; or
determining the index information by the relay device and the network device according to a second rule.

Optionally, the first rule includes determining the index information by the relay device, and the processing unit 1010 is specifically configured to:
send character information of the at least one beam and the index information to the network device.

Optionally, the first rule includes determining the index information by the network device, and the processing unit 1010 is specifically configured to:
send character information of the at least one beam to the network device;
receive first configuration information sent by the network device, the first configuration information including the index information.

Optionally, the first rule includes determining the index information by the relay device and the network device according to the second rule, and the processing unit 1010 is specifically configured to:
send character information of the at least one beam to the network device; and
determine the index information according to the second rule.

Optionally, the processing unit 1010 is further configured to:
determine the first rule according to a provision of a protocol.

Optionally, the processing unit 1010 is further configured to:
send first indication information to the network device, the first indication information being used to indicate the first rule.

Optionally, the processing unit 1010 is further configured to:
receive second configuration information sent by the network device, the second configuration information including the index information; and
determine the index information according to the second configuration information.

Optionally, at least one of the following information is included in an RRC signaling or an OAM signaling:
the character information of the at least one beam, the index information of the beam, the first configuration information, the second configuration information or the first indication information.

The beam indication apparatus in the embodiments can determine the index information of the at least one beam on the access link according to the first rule, and the first rule includes at least one of determining the index information of the at least one beam by the relay device, determining the index information of the at least one beam by the network device, or determining the index information of the at least one beam by the relay device and the network device according to the second rule, so that the network device and the relay device can determine the mapping relationship between the logical index of the beam and each actual physical beam, and the network device and the relay device can determine the index of the beam on the access link, which facilitates subsequent beam-based communication, effectively improves the system communication efficiency, and enhances the system coverage.

Please refer to FIG. 11, which is a structural diagram of a beam indication apparatus provided by an embodiment of the present disclosure.

As shown in FIG. 11, the beam indication apparatus 1100 includes: a processing unit 1110.

The processing unit 1110 is configured to determine index information of at least one beam on an access link according to a first rule.

The first rule includes at least one of:
determining the index information by a relay device
determining the index information by the network device; or
determining the index information by the relay device and the network device according to a second rule.

Optionally, the first rule includes determining the index information by the relay device, and the processing unit 1110 is specifically configured to:
receive character information of the at least one beam and the index information sent by the relay device.

Optionally, the first rule includes determining the index information by the network device, and the processing unit 1110 is specifically configured to:
receive character information of the at least one beam sent by the relay device;
send first configuration information to the relay device, the first configuration information including the index information.

Optionally, the first rule includes determining the index information by the relay device and the network device according to the second rule, and the processing unit 1110 is specifically configured to:
receive character information of the at least one beam sent by the relay device; and
determine the index information according to the second rule.

Optionally, the processing unit 1110 is further configured to:
determine the first rule according to a provision of a protocol.

Optionally, the processing unit 1110 is further configured to:
receive first indication information sent by the relay device, the first indication information being used to indicate the first rule.

Optionally, the processing unit 1110 is further configured to:
send second configuration information to the relay device, the second configuration information including the index information, and the second configuration information being used by the relay device to determine the index information.

Optionally, at least one of the following information is included in an RRC signaling or an OAM signaling:
the character information of the at least one beam, the index information of the beam, the first configuration information, the second configuration information, or the first indication information.

The beam indication apparatus of the embodiments can determine the index information of the at least one beam on the access link according to the first rule, and the first rule includes at least one of determining the index information of the at least one beam by the relay device, determining the index information of the at least one beam by the network device, or determining the index information of the at least one beam by the relay device and the network device according to the second rule, so that the network device and the relay device can determine the mapping relationship between the logical index of the beam and each actual physical beam, and the network device and the relay device can determine the index of the beam on the access link, which facilitates subsequent beam-based communication, effectively improves the system communication efficiency, and enhances the system coverage.

In order to implement the above embodiments, the embodiments of the present disclosure also provide a communication apparatus, including: a processor and a memory storing a computer program. The processor executes the computer program stored in the memory, so that the apparatus executes the method shown in the embodiments of FIGS. 2 to 5.

In order to implement the above embodiments, the embodiments of the present disclosure also provide a communication apparatus, including: a processor and a memory storing a computer program. The processor executing the computer program stored in the memory, so that the apparatus executes the method shown in the embodiments of FIGS. 6 to 9.

In order to implement the above embodiments, the embodiments of the present disclosure also provide a communication apparatus, including: a processor and an interface circuit, the interface circuit is configured to receive code instructions and transmit them to the processor, and the processor is configured to run the code instructions to execute the methods shown in the embodiments of FIGS. 2 to 6.

In order to implement the above embodiments, the embodiments of the present disclosure also provide a communication apparatus, including: a processor and an interface circuit, the interface circuit is configured to receive code instructions and transmit them to the processor, and the processor is configured to run the code instructions to execute the methods shown in the embodiments of FIGS. 6 to 9.

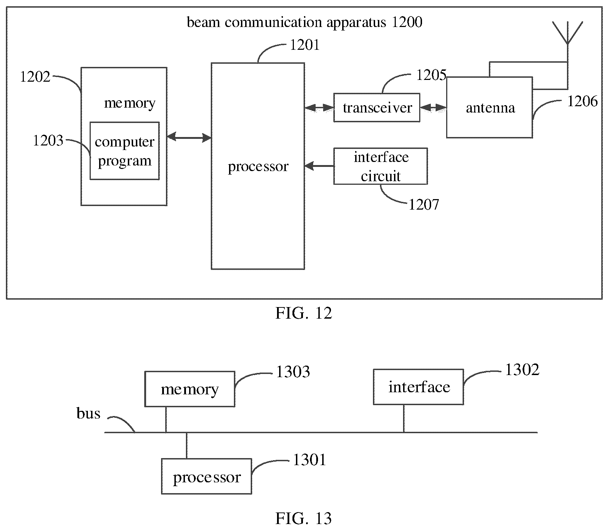

Please refer to FIG. 12, which is a schematic structural diagram of another beam communication apparatus 1200 according to an embodiment of the present disclosure. The beam communication apparatus 1200 may be a network device or a terminal, or may be a chip, a chip system, a processor, or the like that supports the network device to implement the foregoing methods, or may be a chip, a chip system, a processor, or the like that supports the terminal to implement the foregoing methods. The apparatus may be configured to implement the methods described in the foregoing method embodiments, for details, refer to the descriptions in the foregoing method embodiments.

The beam communication apparatus 1200 may include one or more processors 1201. The processor 1201 may be a general-purpose processor or a dedicated processor, such as a baseband processor or a central processing unit. The baseband processor may be configured to process a communication protocol and communication data, and the central processing unit may be configured to control the communication apparatus (for example, a base station, a baseband chip, a terminal device, a terminal device chip, a DU, or a CU), execute a computer program, and process data of the computer program.

Optionally, the beam communication apparatus 1200 may further include one or more memories 1202, which may store a computer program 1203, and the processor 1201 executes the computer program 1203, so that the beam communication apparatus 1200 performs the methods described in the foregoing method embodiments. The computer program 1203 may be cured in the processor 1201, and in this case, the processor 1201 may be implemented by hardware.

Optionally, the memory 1202 may further store data. The beam communication apparatus 1200 and the memory 1202 may be separately disposed, or may be integrated together.

Optionally, the beam communication apparatus 1200 may further include a transceiver 1205, and an antenna 1206. The transceiver 1205 may be referred to as a transceiving unit, a transceiver, a transceiving circuit, or the like, and is configured to implement a transceiving function. The transceiver 1205 may include a receiver and a transmitter, the receiver may be referred to as a receiving unit or a receiving circuit, and is configured to implement a receiving function; and the transmitter may be referred to as a transmitting unit or a transmitting circuit, and is configured to implement a transmitting function.

Optionally, the beam communication apparatus 1200 may further include one or more interface circuits 1207, and the interface circuit 1207 is configured to receive code instructions and transmit the code instructions to the processor 1201. The processor 1201 runs the code instructions to cause the beam communication apparatus 1200 to perform the methods described in the foregoing method embodiments.

In an implementation, the processor 1201 may include a transceiver configured to implement a receiving and transmitting function. For example, the transceiver may be a transceiving circuit, an interface, or an interface circuit. The transceiving circuit, the interface, or the interface circuit configured to implement the receiving and transmitting function may be separate, or may be integrated together. The transceiving circuit, the interface, or the interface circuit may be configured to read/write code/data, or the transceiving circuit, the interface, or the interface circuit may be configured to transmit or send a signal

In an implementation, the beam communication apparatus 1200 may include a circuit, and the circuit may implement a function of sending or receiving or communicating in the foregoing method embodiments. The processor and the transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, and the like. The processor and the transceiver may also be fabricated using various IC process technologies, such as complementary metal oxide semiconductor (CMOS), n-metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), and the like.

The beam indication apparatus described in the above embodiments may be a network device or a relay device, but the scope of the beam indication apparatus described in the present disclosure is not limited thereto, and the structure of the beam indication apparatus may not be limited by FIG. 10-FIG. 11. The beam indication apparatus may be an independent device or may be part of a larger device. For example, the beam indication apparatus may be:
(1) an independent integrated circuit IC, or a chip, or a chip system or subsystem;
(2) a set having one or more ICs, optionally, the IC set may also include a storage component for storing data and a computer program;
(3) an ASIC, such as a modem;
(4) modules that can be embedded in other devices;
(5) a receiver, a terminal device, a smart terminal, a cellular phone, a wireless device, a handset, a mobile unit, a vehicle-mounted device, a network device, a cloud device, an artificial intelligence device, etc.;
(6) other, etc.

For a case where the beam indicating apparatus may be a chip or a chip system, reference may be made to the schematic diagram of the chip structure shown in FIG. 13. The chip shown in FIG. 13 includes a processor 1301 and an interface 1302. The number of processors 1301 may be one or more, and the number of interfaces 1302 may be multiple.

For a case where the chip is used to implement the functions of the relay device in the embodiments of the present disclosure:
the interface 1302 is configured to receive code instructions and transmit them to the processor;
the processor 1301 is configured to execute the code instructions to perform the methods shown in FIGS. 2 to 5 .

For a case where the chip is used to implement the functions of the network device in the embodiments of the present disclosure:
the interface 1302 is configured to receive code instructions and transmit them to the processor;
the processor 1301 is configured to execute the code instructions to perform the methods shown in FIGS. 6 to 9.

Optionally, the chip further includes a memory 1303, and the memory 1303 is configured to store necessary computer programs and data.

Those skilled in the art may further understand that various illustrative logical blocks and steps listed in the embodiments of the present disclosure may be implemented by electronic hardware, computer software, or a combination of the two. Whether such functionality is implemented by hardware or software depends upon the particular application and design requirements of the overall system. A person skilled in the art may use various methods to implement the functions for each particular application, but it should not be understood that the implementation goes beyond the protection scope of the embodiments of the present disclosure.

The embodiments of the present disclosure also provide a communication system, which includes the beam indication apparatus as the relay device and the beam indication apparatus as the network device in the aforementioned embodiments of FIGS. 10 and 11, or the system includes the beam indication apparatus as the relay device and the beam indication apparatus as the network device in the aforementioned embodiment of FIG. 12.

The present disclosure also provides a readable storage medium having instructions stored thereon, which implement the functions of any of the above method embodiments when executed by a computer.

The present disclosure also provides a computer program product, which implements the functions of any of the above method embodiments when executed by a computer.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs. When the computer program is loaded and executed on a computer, the procedure or functions according to the embodiments of the present disclosure are all or partially generated. The computer may be a general-purpose computer, a dedicated computer, a computer network, or another programmable apparatus. The computer program may be stored in a computer-readable storage medium or transmitted from one computer-readable storage medium to another computer-readable storage medium, for example, the computer program may be transmitted from a website, a computer, a server, or a data center to another website, a computer, a server, or a data center in a wired (for example, a coaxial cable, an optical fiber, a digital subscriber line (DSL)), or a wireless (e.g. infrared, wireless, microwave, etc.) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disk (DVD)), a semiconductor medium (for example, a solid state disk (SSD)), or the like.

Those skilled in the art can understand that the various numerical numbers such as first and second involved in the present disclosure are only used for the convenience of description and are not used to limit the scope of the embodiments of the present disclosure, but also indicate a sequence.

In the present disclosure, "at least one of" may also be described as one or more, and "a plurality of" may be two, three, four, or more, which is not limited in the present disclosure. In the embodiments of the present disclosure, for a type of technical feature, technical features in the type of technical feature are distinguished by "first", "second", "third", "A", "B", "C" and "D", etc. and the technical features described by "first", "second", "third", "A", "B", "C" and "D" do not have a sequential order or a sequence of sizes.

The correspondence relationships shown in the tables in the present disclosure may be configured or predefined. The values of the information in the tables are merely examples, and may be configured as other values, which is not limited in the present disclosure. When configuring the correspondence relationships between the information and the parameters, it does not need to configure all the corresponding relationships shown in the tables. For example, in the tables in the present disclosure, the correspondence relationships shown in some rows may also not be configured. For another example, appropriate deformation adjustment may be performed based on the foregoing tables, for example, splitting, merging, and the like. The names of the parameters in the foregoing tables may also be other names that may be understood by the communication apparatus, and a value or a representation manner of the parameters may also be any other value or representation manner that can be understood by the communication apparatus. When the foregoing tables are implemented, other data structures may also be used, for example, an array, a queue, a container, a stack, a linear table, a pointer, a linked list, a tree, a graph, a structure, a class, a heap, a hash table, or the like may be used.

Predefined in the present disclosure may be understood as definition, pre-definition, storage, pre-storage, pre-negotiation, pre-configuration, curing, or pre-firing.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that such implementation goes beyond the scope of the present disclosure.

Those skilled in the art can clearly understand that, for the convenience and brevity of description, the specific working processes of the systems, devices and units described above can refer to the corresponding processes in the aforementioned method embodiments and will not be repeated here.

It should be understood that the various forms of processes shown above may be used to reorder, add or delete steps. For example, the steps recorded in the embodiments of the present disclosure may be executed in parallel, sequentially or in different orders, as long as the desired results of the technical solutions in the present disclosure can be achieved, which is not limited by the present disclosure.

The above specific implementations do not constitute a limitation on the protection scope of the present disclosure. It should be understood by those skilled in the art that various modifications, combinations, sub-combinations and substitutions may be made according to design requirements and other factors. Any modification, equivalent substitution and improvement made within the spirit and principle of the present disclosure should be included in the protection scope of the present disclosure.

## Claims

1. A beam indication method, performed by a relay device, comprising:
determining index information of at least one beam on an access link according to a first rule;
the first rule comprising at least one of:
determining the index information by the relay device;
determining the index information by a network device; or
determining the index information by the relay device and the network device according to a second rule.

2. The method according to claim 1, wherein the first rule comprises determining the index information by the relay device, and determining the index information of the at least one beam on the access link comprises:
sending character information of the at least one beam and the index information to the network device.

3. The method according to claim 1, wherein the first rule comprises determining the index information by the network device, and determining the index information of the at least one beam on the access link comprises:
sending character information of the at least one beam to the network device; and
receiving first configuration information sent by the network device, the first configuration information comprising the index information.

4. The method according to claim 1, wherein the first rule comprises determining the index information by the relay device and the network device according to the second rule, and determining the index information of the at least one beam on the access link comprises:
sending character information of the at least one beam to the network device; and
determining the index information according to the second rule.

5. The method according to any one of claims 2 to 4, further comprising:
determining the first rule according to a provision of a protocol.

6. The method according to any one of claims 2 to 4, further comprising:
sending first indication information to the network device, the first indication information being used to indicate the first rule.

7. The method according to claim 2 or 4, further comprising:
receiving second configuration information sent by the network device, the second configuration information comprising the index information; and
determining the index information according to the second configuration information.

8. The method according to any one of claims 1 to 7, wherein at least one of the character information of the at least one beam, the index information of the beam, the first configuration information, the second configuration information, or the first indication information is comprised in a radio control resource (RRC) signaling or an operation administration and maintenance (OAM) signaling.

9. A beam indication method, performed by a network device, comprising:
determining index information of at least one beam on an access link according to a first rule;
the first rule comprising at least one of:
determining the index information by a relay device;
determining the index information by the network device; or
determining the index information by the relay device and the network device according to a second rule.

10. The method according to claim 9, wherein the first rule comprises determining the index information by the relay device, and determining the index information of the at least one beam on the access link comprises:
receiving character information of the at least one beam and the index information sent by the relay device.

11. The method according to claim 9, wherein the first rule comprises determining the index information by the network device, and determining the index information of the at least one beam on the access link comprises:
receiving character information of the at least one beam sent by the relay device;
sending first configuration information to the relay device, the first configuration information comprising the index information.

12. The method according to claim 9, wherein the first rule comprises determining the index information by the relay device and the network device according to the second rule, and determining the index information of the at least one beam on the access link comprises:
receiving character information of the at least one beam sent by the relay device; and
determining the index information according to the second rule.

13. The method according to any one of claims 10 to 12, further comprising:
determining the first rule according to a provision of a protocol.

14. The method according to any one of claims 10 to 12, further comprising:
receiving first indication information sent by the relay device, the first indication information being used to indicate the first rule.

15. The method according to claim 10 or 12, further comprising:
sending second configuration information to the relay device, the second configuration information comprising the index information, and the second configuration information being used by the relay device to determine the index information.

16. The method according to any one of claims 9 to 15, wherein at least one of the character information of the at least one beam, the index information of the beam, the first configuration information, the second configuration information, or the first indication information is comprised in a radio control resource (RRC) signaling or an operation administration and maintenance (OAM) signaling.

17. A relay device, comprising:
a processing unit, configured to determine index information of at least one beam on an access link according to a first rule;
the first rule comprising at least one of:
determining the index information by the relay device;
determining the index information by a network device; or
determining the index information by the relay device and the network device according to a second rule.

18. A network device, comprising:
a processing unit, configured to determine index information of at least one beam on an access link according to a first rule;
the first rule comprising at least one of:
determining the index information by a relay device;
determining the index information by the network device; or
determining the index information by the relay device and the network device according to a second rule.

19. A communication apparatus, comprising a processor and a memory storing a computer program, wherein the processor executes the computer program stored in the memory, to enable the apparatus to perform the method according to any one of claims 1 to 8, or to perform the method according to any one of claims 9 to 16.

20. A communication apparatus, comprising: a processor and an interface circuit;
the interface circuit being configured to receive code instructions and transmit the code instructions to the processor;
the processor being configured to execute the code instructions to execute the method according to any one of claims 1 to 8, or to execute the method according to any one of claims 9 to 16.

21. A computer-readable storage medium for storing instructions that, when executed, cause the method according to any one of claims 1 to 8 to be implemented, or cause the method according to any one of claims 9 to 16 to be implemented.

22. A communication system, comprising:
a relay device, configured to perform the method according to any one of claims 1 to 8; and
a network device, configured to perform the method according to any one of claims 9 to 16.
